# EUROPEAN PATENT SPECIFICATION

(11) **EP 4 037 061 B1**
(45) Date of publication and mention of the grant of the patent: **03.04.2024**
(21) Application number: 20869193.1
(22) Date of filing: 15.07.2020
(51) Int. Cl.: H01M 10/46, H02J 7/00

(54) **CHARGER FOR PORTABLE BATTERY**
LADEGERÄT FÜR TRAGBARE BATTERIE
CHARGEUR POUR BATTERIE PORTABLE

(30) Priority: 27.09.2019 JP 2019177751
(43) Date of publication of application: 03.08.2022
(73) Proprietor: HONDA MOTOR CO., LTD., Minato-ku Tokyo 107-8556 (JP)
(72) Inventor: TAMAKI Kenji, Tokyo 107-8556 (JP)
(74) Representative: Kiwit, Benedikt
(86) International application number: PCT/JP2020/027520
(87) International publication number: WO 2021/059685

(56) References cited:
- JP-A- H05 315 013
- JP-A- H05 315 013
- JP-A- H10 304 581
- JP-A- H10 304 581
- JP-A- 2002 199 597
- JP-A- 2002 199 597
- JP-A- 2004 236 450
- JP-A- 2017 054 950
- JP-A- 2018 092 746
- JP-A- 2019 193 469
- JP-U- H0 318 643

## Description

### TECHNICAL FIELD

The present invention relates to a charger for a portable battery.

### BACKGROUND ART

In the related art, chargers for a battery used in an electric vehicle are known. For example, JP 2013 - 099 200 A discloses a charger in which a battery having a shape elongated in a vertical direction is detachably mounted. The battery is disposed in a manner of standing upright such that it is elongated in the vertical direction in a state in which the battery is mounted in the charger (in a placed state).

JP H05 - 315 013 A discloses a charger as described in the preamble of claim 1, wherein the further teaching comprises a part of the casing being a triangular holder with an inclined upper surface. JP 2002 - 199 597 A discloses a charger similar to that disclosed by JP H05 - 315 013 A, but without any controller element. JP 2018 - 092 746 A discloses a receptacle for a portable battery. JP H10 - 304 581 A discloses a charger for a portable battery with a drainage hole.

### SUMMARY

### PROBLEMS TO BE SOLVED BY THE INVENTION

However, if a battery in a placed state stands upright such that it is elongated in a vertical direction, there is a high probability that a wide space in the vertical direction may become necessary when the battery is charged.

Hence, an object of the present invention is to reduce a height in a vertical direction in a battery-placed state in a charger for a portable battery.

### MEANS FOR SOLVING THE PROBLEM

Regarding means for resolving the foregoing problems, an aspect of the present invention has the following constitutions.
(1) According to an aspect of the present invention, there is provided a charger (1) for a portable battery used in an electric vehicle. The charger (1) for a portable battery includes a tray (2) in which a battery (100) can be placed, a control device (4) which performs charging control of the battery (100), and a frame (33) which is positioned above the control device (4). The tray (2) has a first inclined surface (10a) which is inclined with respect to a horizontal surface and is formed in a length direction (V1) of the battery (100) in a state of being placed in the charger (1), and a second inclined surface (11a) which rises from a rear lower end portion on the first inclined surface (10a) in a height direction (V2) of the battery (100) in a state of being placed in the charger (1) and receives a bottom surface of the battery (100). The control device (4) is disposed below the first inclined surface (10a). The frame (33) is disposed between the control device (4) and the first inclined surface (10a) in a vertical direction. An upper cover (3) covering a charger terminal (6) from above is provided in an upper rear portion of the charger (1). The frame (33) is disposed on a side in front of a central portion on the first inclined surface (10a) in the length direction (V1). The upper cover (3) has an opening edge portion (3a) along one surface (121) of the battery (100) in a state of being placed in the charger (1). The frame (33) is disposed on a side in front of the opening edge portion (3a). The tray (2) has a placement surface recess portion (14) which is recessed downward beyond the first inclined surface (10a) at an end portion on a side of a grip portion (110) of the battery (100) in a state of being placed in the charger (1), wherein the placement surface recess portion (14) has a size to an extent that a portion of a hand of a user enters. The frame (33) is disposed behind and in the vicinity of a rising portion (14c) of the placement surface recess portion (14), and the rising portion (14c) rises upward toward the first inclined surface (10a) from a rear end on a bottom surface (14a) of the placement surface recess portion (14).
(2) In the charger (1) for a portable battery according to the foregoing (1), the battery (100) may have the grip portion (110) at an end portion in the length direction (V1), and the grip portion (110) may be disposed on an upper end side on the first inclined surface (10a). The frame (33) may be disposed on a side closer to the grip portion (110) than a central portion on the first inclined surface (10a) in the length direction (V1).
(3) In the charger (1) for a portable battery according to the foregoing (1) or (2), a bottom portion of the charger (1) may have a recess portion (16) which is recessed downward at a part positioned below the control device (4).
(4) In the charger (1) for a portable battery according to the foregoing (3), a heat conduction member (20) having a higher heat conductivity than the bottom portion of the charger (1) may be disposed in the recess portion (16).
(5) In the charger (1) for a portable battery according to any one of the foregoing (1) to (4), a rib (10b) projecting upward may be formed on the first inclined surface (10a).
(6) In the charger (1) for a portable battery according to any one of the foregoing (1) to (5), a central portion on the first inclined surface (10a) in a width direction may have a curved surface shape projecting downward.

(7) In the charger (1) for a portable battery according to any one of the foregoing (1) to (6), a drain hole (10h) may be formed at a lowest end on the first inclined surface (10a). The bottom portion of the charger (1) may have an enclosure portion (13) having an opening larger than the drain hole (10h) at a part positioned below the drain hole (10h). A discharge hole (13h) may be formed in the enclosure portion (13).
(8) The charger (1) for a portable battery according to any one of the foregoing (1) to (7) may further include a holding member (7) which holds a charger terminal (6) in a connection direction with respect to the battery (100).
(9) In the charger (1) for a portable battery according to any one of the foregoing (1) to (8), the frame (33) may extend throughout the entirety of the battery (100) in a width direction (V3).

### ADVANTAGE OF THE INVENTION

According to the charger for a portable battery described in the foregoing (1) of the present invention, the tray has the first inclined surface which is inclined with respect to a horizontal surface and is formed in the length direction of the battery in a state of being placed in the charger, and the second inclined surface which rises from the end portion of the first inclined surface in the height direction of the battery in a state of being placed in the charger and receives the bottom surface of the battery. Therefore, the following effect is exhibited.

The first inclined surface and the second inclined surface of the tray are obliquely disposed with respect to the vertical direction. For this reason, compared to when the battery is disposed in a manner of standing upright such that it is elongated in the vertical direction in a state in which the battery is mounted in the charger, the height in the vertical direction in a battery-placed state can be reduced.

Furthermore, the control device is disposed below the first inclined surface. Therefore, the following effect is exhibited. Compared to when the control device is disposed above the first inclined surface, the height of the charger in the vertical direction can be reduced. Furthermore, compared to when the control device is disposed on a lateral side of the first inclined surface, an installation area of the charger can be reduced.

Furthermore, since the frame is disposed between the control device and the first inclined surface in the vertical direction, transfer of an impact to the control device occurring when the battery (heavy article) is placed in the tray can be curbed.

According to the charger for a portable battery described in the foregoing (2) of the present invention, the battery has the grip portion at the end portion in the length direction, and the grip portion is disposed on the upper end side of the first inclined surface. The frame is disposed on a side closer to the grip portion than the central portion on the first inclined surface in the length direction. Therefore, the following effect is exhibited.

Since the grip portion is disposed on the upper end side of the first inclined surface, compared to when the grip portion is disposed on a lower end side of the first inclined surface, the battery is easily placed in the tray. Furthermore, since the frame is disposed on a side closer to the grip portion than the central portion on the first inclined surface in the length direction, a load on the control device occurring when the battery is placed in the tray can be suitably curbed on a side where the battery is easily placed in the tray.

According to the charger for a portable battery described in the foregoing (3) of the present invention, the bottom portion of the charger has the recess portion which is recessed downward at a part positioned below the control device. Therefore, the following effect is exhibited. Heat of the control device can escape via a gap between the control device and the recess portion.

According to the charger for a portable battery described in the foregoing (4) of the present invention, the heat conduction member having a higher heat conductivity than the bottom portion of the charger is disposed in the recess portion. Therefore, the following effect is exhibited.

Heat of the control device can more effectively escape via the heat conduction member.

According to the charger for a portable battery described in the foregoing (5) of the present invention, the rib projecting upward is formed on the first inclined surface. Therefore, the following effect is exhibited.

An impact occurring when the battery is placed on the first inclined surface can be relaxed by the rib.

According to the charger for a portable battery described in the foregoing (6) of the present invention, the central portion on the first inclined surface in the width direction has a curved surface shape projecting downward. Therefore, the following effect is exhibited.

Accumulation of heat on a lower surface of the battery (a surface on a side of the first inclined surface) can be curbed.

According to the charger for a portable battery described in the foregoing (7) of the present invention, the drain hole is formed at the lowest end on the first inclined surface. The bottom portion of the charger has the enclosure portion having an opening larger than the drain hole at a part positioned below the drain hole. The discharge hole is formed in the enclosure portion. Therefore, the following effect is exhibited.

Water which has infiltrated into the tray can be suitably discharged via the drain hole and the discharge hole.

According to the charger for a portable battery described in the foregoing (8) of the present invention, the charger further includes the holding member which holds the charger terminal in a connection direction with respect to the battery. Therefore, the following effect is exhibited.

The charger terminal can be smoothly connected to the battery by the holding member.

According to the charger for a portable battery described in the foregoing (9) of the present invention, the frame extends throughout the entirety of the battery in the width direction. Therefore, the following effect is exhibited.

Transfer of an impact to the control device occurring when the battery (heavy article) is placed in the tray can be more effectively curbed.

### BRIEF DESCRIPTION OF THE DRAWINGS

Fig. 1 is a perspective view of a charger for a battery in a placed state according to an embodiment.
Fig. 2 is a front view of the charger for the battery in a placed state according to the embodiment.
Fig. 3 is a perspective view of the charger according to the embodiment.
Fig. 4 is a front view of the charger according to the embodiment.
Fig. 5 is a top view of the charger according to the embodiment.
Fig. 6 is a view in a state in which a tray and an upper cover in Fig. 5 are detached.
Fig. 7 is a cross-sectional view along VII-VII in Fig. 5.
Fig. 8 is a cross-sectional view along VIII-VIII in Fig. 5.
Fig. 9 is a cross-sectional view along IX-IX in Fig. 5.
Fig. 10 is a cross-sectional view along X-X in Fig. 5.
Fig. 11 is a cross-sectional view along XI-XI in Fig. 5.
Fig. 12 is a cross-sectional view along XII-XII in Fig. 2.
Fig. 13 is an explanatory view of a position of an end portion of the upper cover according to the embodiment.

### DESCRIPTION OF THE EMBODIMENTS

Hereinafter, an embodiment of the present invention will be described with reference to the drawings. In each of the diagrams, the same reference signs are applied to the same constitutions. In the embodiment, as an example of a charger for a portable battery, a charger for a portable battery (mobile battery) used in an electrically-driven motorcycle (saddle-type electric vehicle) will be described. In the embodiment, an installation surface on which a charger (which will hereinafter be simply referred to as "a charger") for a portable battery (which will hereinafter be simply referred to as "a battery") is installed is a flat floor surface (horizontal surface).

### <Battery>

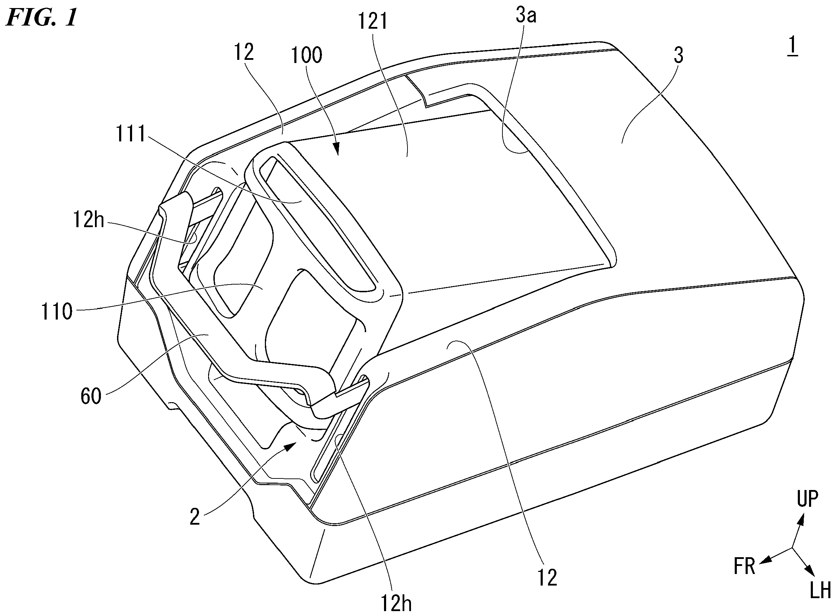

As illustrated in Fig. 1, a battery 100 has a rectangular parallelepiped shape. For example, the battery 100 is a lithium-ion battery.

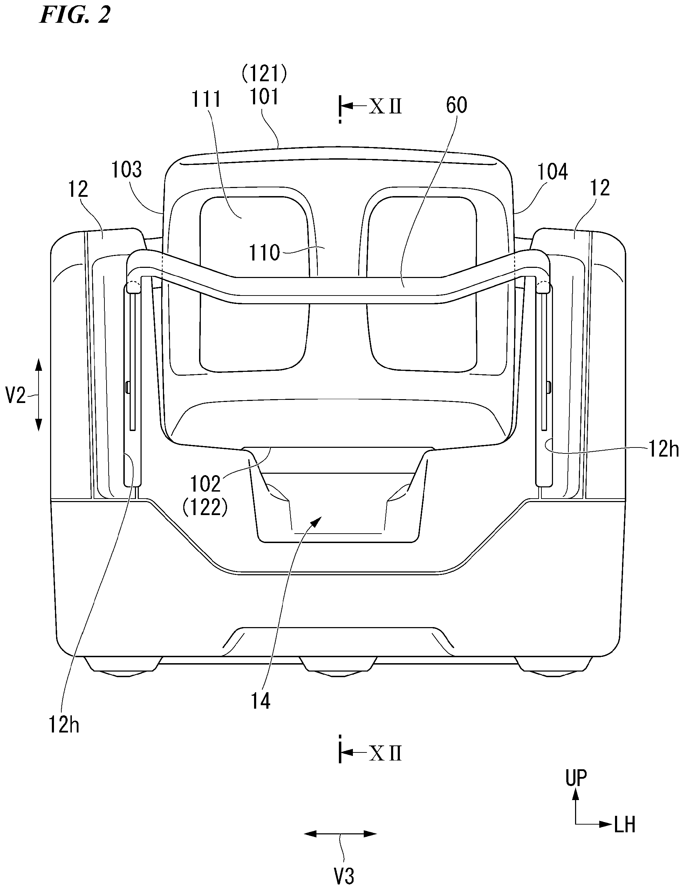

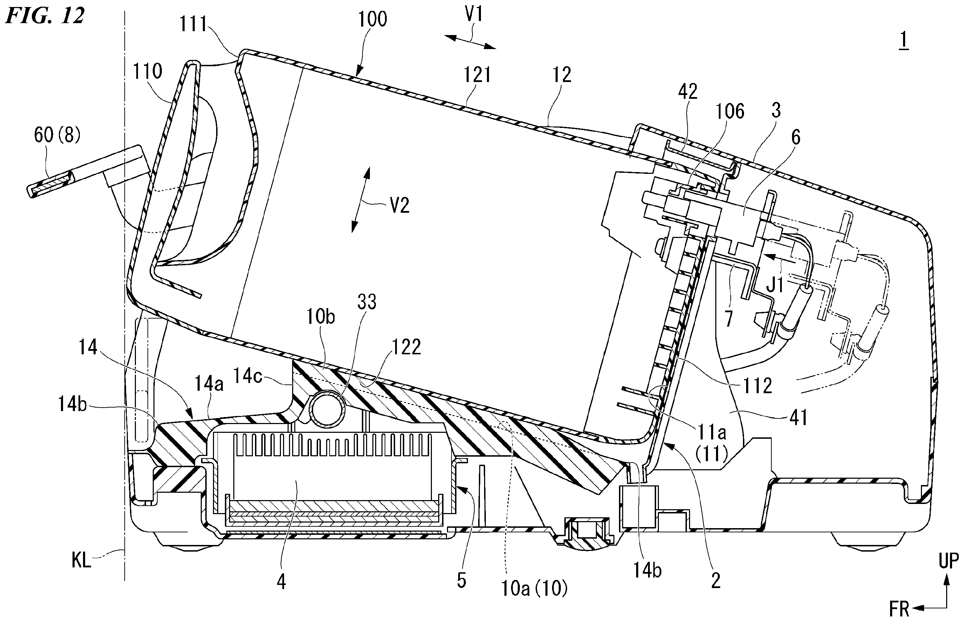

As illustrated in Fig. 2, the battery 100 has a pair of first side 101 and second side 102 above and below extending in a width direction V3, and a pair of third side 103 and fourth side 104 on the left and the right extending in a height direction V2 (refer to Fig. 12). The battery 100 has side surfaces 121 and 122 extending in a length direction V1 (refer to Fig. 12). The first side 101 has a curved line shape projecting toward a side opposite to the second side 102 (upper side in Fig. 2). The side surface 121 on a side of the first side 101 (one surface of the battery 100 in the height direction V2) of side surfaces of the battery 100 has a curved surface shape projecting toward a side opposite to the side surface 122 on a side of the second side 102.

The battery 100 has a grip portion 110 (handle) gripped by a user. The grip portion 110 is provided at an end portion of the battery 100 in the length direction V1 (refer to Fig. 12). The grip portion 110 is provided on a first surface 111 facing one side of the battery 100 in the length direction V1. A terminal 106 of the battery 100 (which will hereinafter be simply referred to as "a battery terminal 106") is provided on a second surface 112 (bottom surface) on a side opposite to the first surface 111 in the length direction V1 of the battery 100 (refer to Fig. 12). The battery terminal 106 is disposed in the vicinity of the side surface 121 (which will hereinafter be referred to as "a first side surface 121") on a side of the first side 101 of the second surface 112 (refer to Fig. 12).

### <Charger>

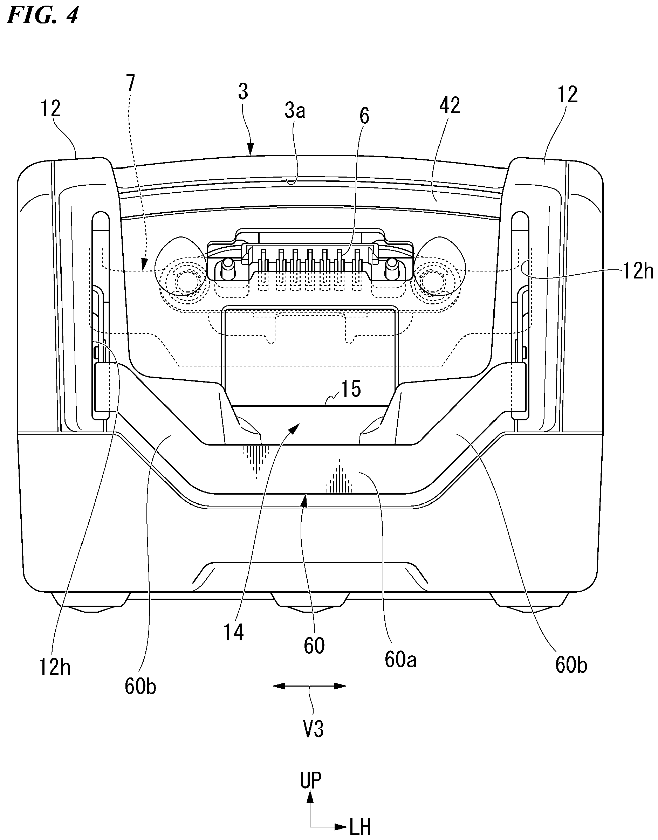

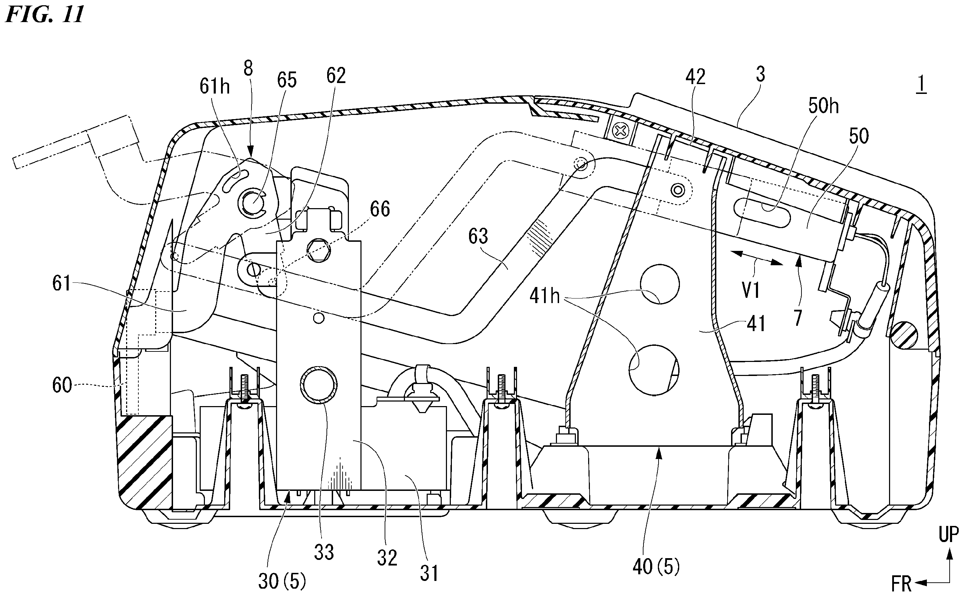

As illustrated in Fig. 1, a charger 1 includes a tray 2 in which the battery 100 is placed, an upper cover 3 which covers a portion of the tray 2 from above, a control device 4 which performs charging control of the battery 100 (refer to Fig. 12), a main body frame 5 which constitutes a skeleton of a main body of the charger 1 (refer to Fig. 11), a terminal 6 of the charger 1 (which will hereinafter be simply referred to as "a charger terminal 6", refer to Fig. 4), a holding member 7 which holds the charger terminal 6 (refer to Fig. 4), and an operation mechanism 8 which moves the charger terminal 6 (refer to Fig. 11). The bottom surface of the charger 1 is formed to be parallel to (horizontally with respect to) the floor surface.

In the following description, a depth direction when the charger 1 is installed on the floor surface (a direction orthogonal to the paper illustrated in Fig. 4) will be referred to as "a forward-rearward direction", a normal direction (vertical direction) of the floor surface will be referred to as "a vertical direction", and a direction orthogonal to each of the forward-rearward direction and the vertical direction will be referred to as "a lateral direction (width direction)". In the diagrams, an arrow FR indicates the forward side, an arrow UP indicates the upward side, and an arrow LH indicates the left side, respectively.

### <Tray>

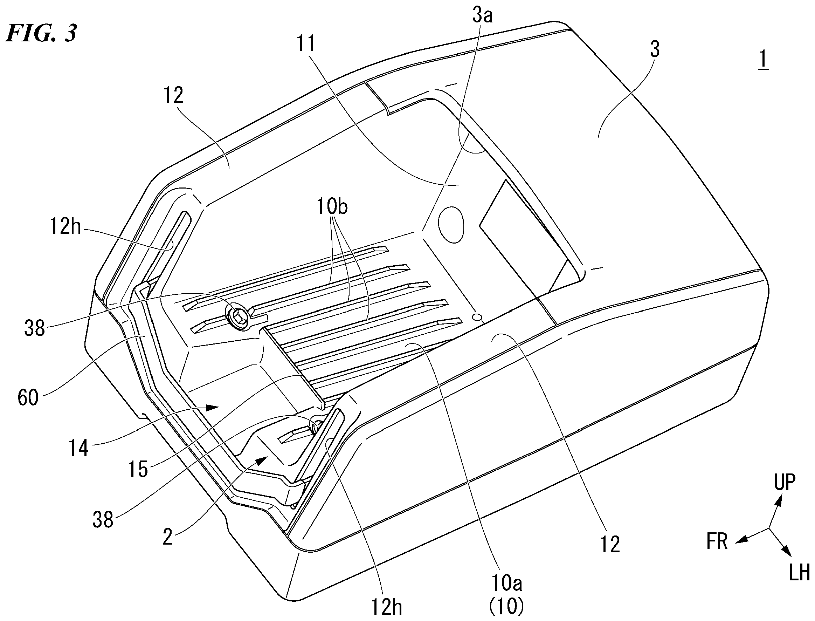

As illustrated in Fig. 3, the tray 2 opens upward and forward such that the battery 100 (refer to Fig. 1) can be placed therein and taken out. The tray 2 includes a bottom surface portion 10 which is formed in the length direction V1 of the battery 100 in a state of being placed in the charger 1, a receiving surface portion 11 which receives a bottom portion of the battery 100, and a pair of left and right side surface portions 12 which face the side surfaces of the battery 100 in the width direction V3. The receiving surface portion 11 and the pair of left and right side surface portions 12 rise from the bottom surface portion 10 in the height direction V2 of the battery 100 in a state of being placed in the charger 1 (refer to Fig. 12). In the diagrams, the reference sign 12h indicates a long hole for restricting movement of a lever 60 (turning of a first link 61 around a first pivot shaft 65).

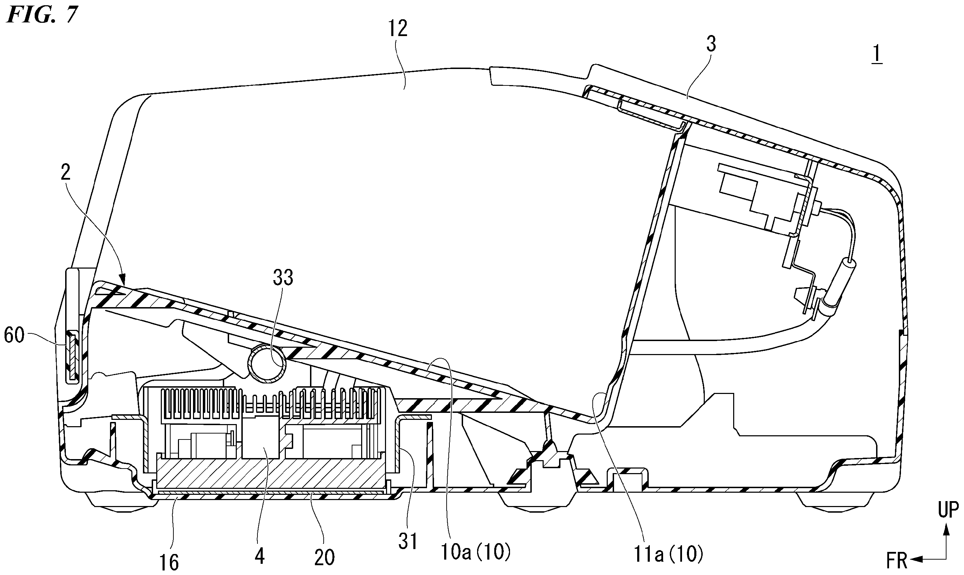

As illustrated in Fig. 7, the bottom surface portion 10 has a first inclined surface 10a which is inclined with respect to the bottom surface of the charger 1. The first inclined surface 10a is a placement surface on which the battery 100 is placed. The first inclined surface 10a is inclined with respect to a horizontal surface. The first inclined surface 10a is formed in the length direction V1 of the battery 100 in a state of being placed in the charger 1. The first inclined surface 10a is a surface facing the side surface 122 (which will hereinafter be referred to as "a second side surface 122") on a side of the second side 102 of the battery 100. The first inclined surface 10a is inclined such that the angle formed between the first inclined surface 10a and the bottom surface of the charger 1 becomes an acute angle smaller than 45°.

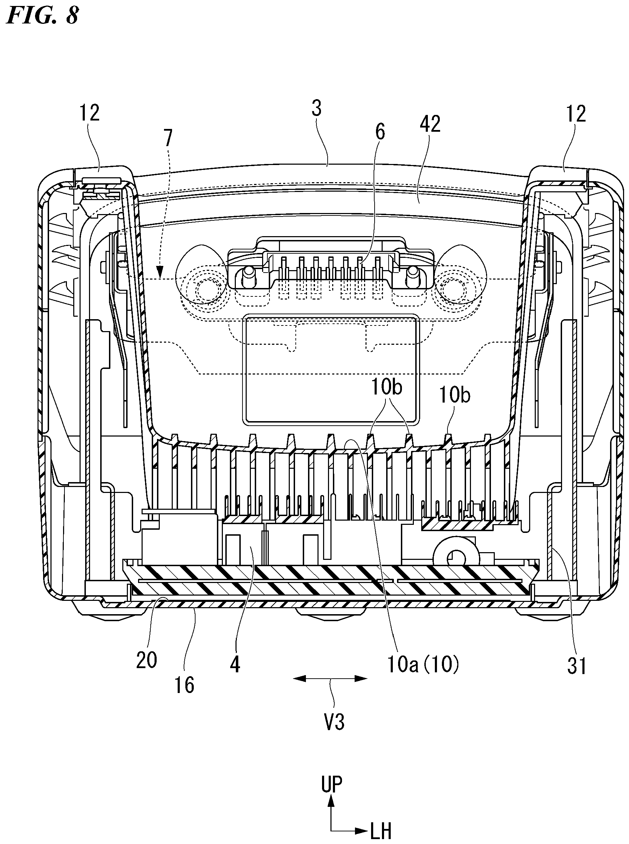

As illustrated in Fig. 8, a central portion on the first inclined surface 10a in the width direction V3 has a curved surface shape projecting downward. The first inclined surface 10a is curved such that a center position in the width direction V3 becomes the lowermost position, and outer end positions in the width direction V3 become the uppermost positions. The first inclined surface 10a in its entirety has an arc shape projecting downward.

Ribs 10b projecting upward are formed on the first inclined surface 10a. The ribs 10b extend in the forward-rearward direction. A plurality of ribs 10b are disposed at intervals in the width direction V3. Sizes of the intervals between two ribs 10b adjacent to each other in the width direction V3 are the same as each other. Upper ends of the plurality of ribs 10b in the vertical direction are positioned at the same positions. In a state in which the battery 100 is placed in the tray 2 (which will hereinafter be referred to as "a placed state"), the upper end of each of the ribs 10b comes into contact with the second side surface 122 of the battery 100.

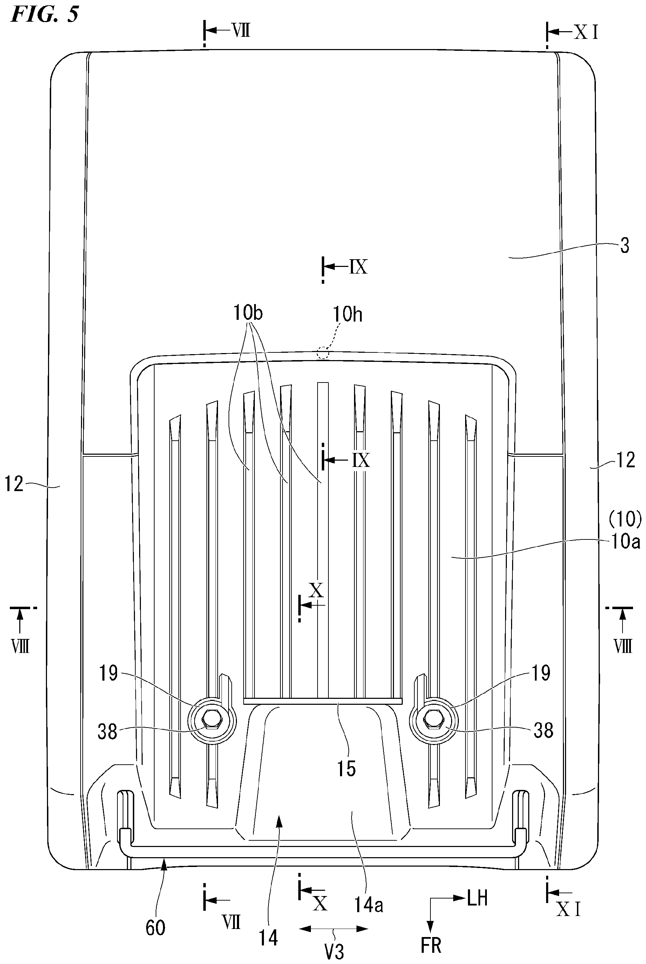

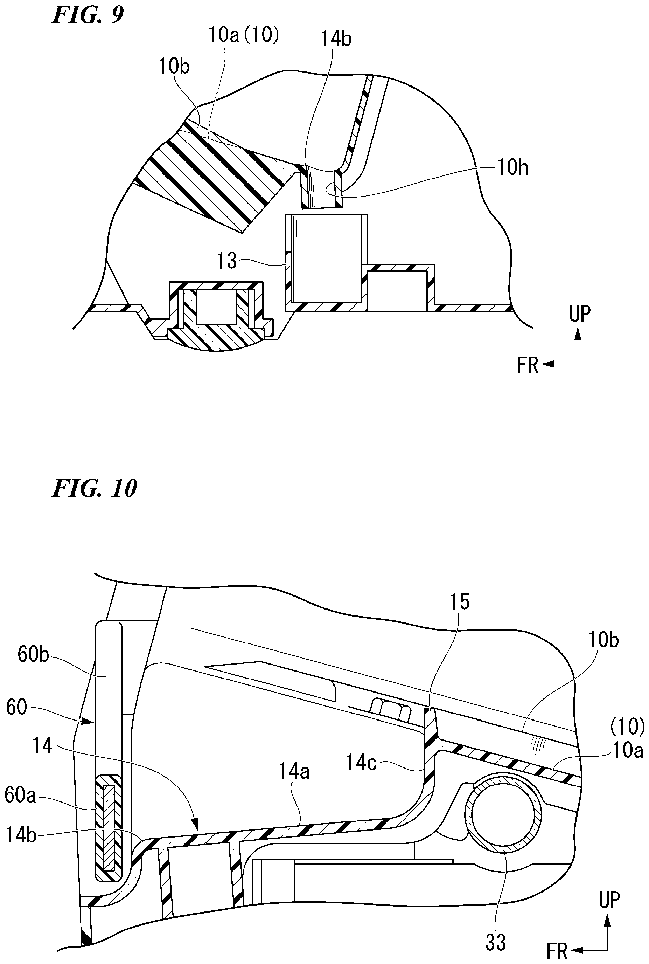

As illustrated in Fig. 9, a drain hole 10h is formed at a lowest end 14b on the first inclined surface 10a. The drain hole 10h is disposed at the center of a rear end portion on the first inclined surface 10a in the width direction V3 (refer to Fig. 5). The drain hole 10h opens at a rear end portion on the first inclined surface 10a in the vertical direction.

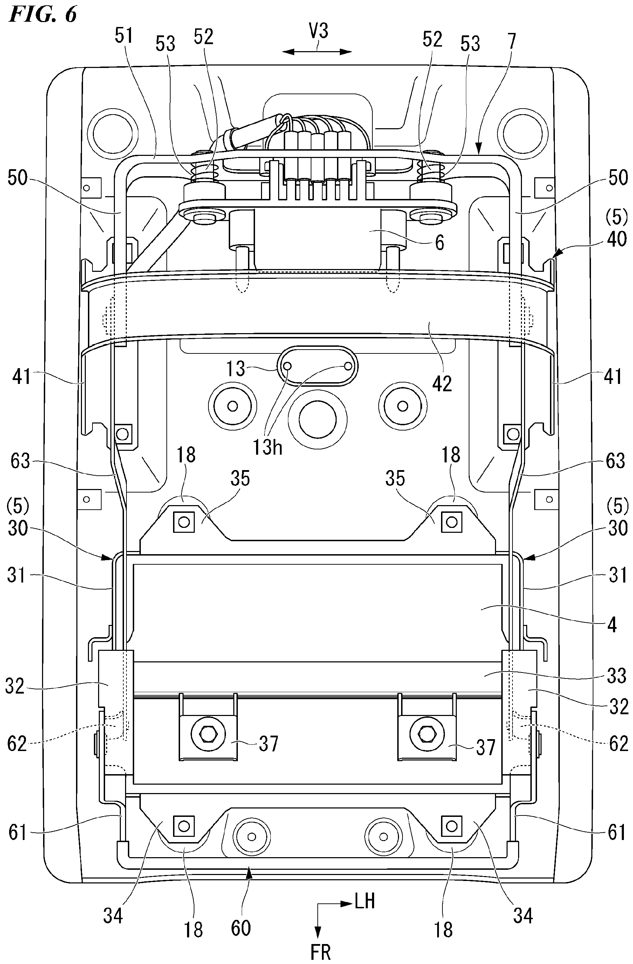

A bottom portion of the charger 1 has an enclosure portion 13 at a part positioned below the drain hole 10h. The enclosure portion 13 has a bottomed tubular shape with an opening larger than the drain hole 10h. Specifically, the enclosure portion 13 has an opening larger than a tubular portion having the drain hole 10h. The enclosure portion 13 has a ring shape extending in the width direction V3 (refer to Fig. 6). As illustrated in Fig. 6, discharge holes 13h are formed in a bottom portion of the enclosure portion 13. A pair of left and right discharge holes 13h are disposed with an interval therebetween in the width direction V3. The pair of left and right discharge holes 13h are disposed at both ends of the enclosure portion 13 in the width direction V3.

As illustrated in Fig. 7, the receiving surface portion 11 has a second inclined surface 11a which is inclined with respect to the bottom surface of the charger 1. The second inclined surface 11a rises from the end portion (rear lower end portion) on the first inclined surface 10a in the height direction V2 of the battery 100 in a placed state. The second inclined surface 11a is a part receiving the second surface 112 of the battery 100. The second inclined surface 11a is inclined such that it is orthogonal to the first inclined surface 10a. The second inclined surface 11a is inclined such that the angle formed between the second inclined surface 11a and the bottom surface of the charger 1 becomes an acute angle larger than 45°.

As illustrated in Fig. 12, upper end positions of the side surface portions 12 are positioned below an upper end position of the battery 100 in a placed state. In a side view of Fig. 7, upper end edges of the side surface portions 12 are inclined such that they are positioned downward toward the front side from the upper end positions. In a side view, front end edges of the side surface portions 12 are inclined such that they are positioned forward toward a lower side from front ends at the upper end edges.

As illustrated in Fig. 12, the grip portion 110 of the battery 100 in a placed state is disposed on an upper end side on the first inclined surface 10a. In a side view, the upper ends at the front end edges of the side surface portions 12 (front ends at the upper end edges) are positioned behind a front end position of the grip portion 110 of the battery 100 in a placed state. In a side view, a portion of the grip portion 110 of the battery 100 in a placed state is exposed from the side surface portions 12. In a side view, the front end portion of the battery 100 in a placed state does not protrude outward beyond the tray 2. In the diagrams, the reference sign KL indicates a perpendicular line (imaginary vertical line) passing through the front end portion of the tray 2. The front end portion of the battery 100 in a placed state is positioned on a side inward from the perpendicular line KL (charger 1 side).

The tray 2 has a recess portion 14 (which will hereinafter be referred to as "a placement surface recess portion 14") which is recessed downward beyond the first inclined surface 10a (placement surface) at the end portion on a side of the grip portion 110 of the battery 100 in a placed state. For example, the placement surface recess portion 14 has a size to an extent that a portion of a hand (finger) of a user enters. The placement surface recess portion 14 is disposed at the center of the tray 2 in the width direction V3 (refer to Fig. 4). In a top view, the placement surface recess portion 14 has a trapezoidal external shape having an upper base on the rear side and a lower base longer than the upper base in the width direction V3 on the front side (refer to Fig. 5).

In a cross-sectional view of Fig. 10, a bottom surface 14a of the placement surface recess portion 14 is inclined such that it is positioned downward toward the front side. The lowest end 14b of the placement surface recess portion 14 is positioned above the upper end of the control device 4 (refer to Fig. 12). In the diagrams, the reference sign 14c indicates a rising portion which rises upward toward the first inclined surface 10a from a rear end on the bottom surface 14a of the placement surface recess portion 14.

A wall portion 15 projecting upward beyond the first inclined surface 10a is provided at a boundary portion between the placement surface recess portion 14 and the first inclined surface 10a. The wall portion 15 is a part protruding upward beyond the first inclined surface 10a from an upper end of the rising portion 14c. The upper end edge of the wall portion 15 linearly extends in the width direction V3 (refer to Fig. 4).

The wall portion 15 is connected to a front end of the rib 10b of the plurality of ribs 10b positioned in the vicinity of the center in the width direction V3 (refer to Fig. 5). The position of the upper end of the wall portion 15 in the vertical direction is the same position as the positions of the upper ends of the ribs 10b in the vertical direction. The upper end of the wall portion 15 comes into contact with the second side surface 122 of the battery 100 in a placed state together with each of the ribs 10b.

### <Upper cover>

As illustrated in Fig. 3, the upper cover 3 is provided at an upper rear portion of the charger 1. The upper cover 3 covers a portion of the bottom surface portion 10 and the pair of left and right side surface portions 12 of the tray 2 from above (refer to Fig. 12). As illustrated in Fig. 12, the upper cover 3 covers the charger terminal 6 and the holding member 7 from above. In a side view, an upper edge of the upper cover 3 is inclined such that it is positioned downward toward the rear side. In a front view of Fig. 4, an opening edge portion 3a of the upper cover 3 has a curved surface shape along the first side surface 121 of the battery 100 (refer to Fig. 2).

### <Control device>

As illustrated in Fig. 12, the control device 4 is disposed below the first inclined surface 10a of the tray 2. In a top view of Fig. 6, the control device 4 has a rectangular shape extending in the width direction V3. The control device 4 includes a plurality of control substrates for performing charging control of the battery 100. For example, the control substrates may be disposed such that control circuits for performing charging control of the battery 100 are directed toward the inward side. For example, fins or heat sinks may be provided on outer surfaces of the control substrates.

As illustrated in Fig. 7, the bottom portion of the charger 1 has a recess portion 16 which is recessed downward (which will hereinafter be referred to as "a bottom surface recess portion 16") at a part positioned below the control device 4. When viewed in the vertical direction, the bottom surface recess portion 16 is disposed at a position overlapping the control device 4. When viewed in the vertical direction, the bottom surface recess portion 16 has a rectangular external shape larger than the external shape of the control device 4. A heat conduction member 20 is disposed in the bottom surface recess portion 16 having a higher heat conductivity than the bottom portion of the charger 1. For example, the bottom portion of the charger 1 is made of a resin. For example, the heat conduction member 20 is an aluminum sheet.

### <Main body frame>

As illustrated in Fig. 11, the main body frame 5 includes a front frame 30 which is positioned at a front portion of the charger 1, and a rear frame 40 which is positioned at a rear portion of the charger 1.

When viewed in the vertical direction, the front frame 30 includes a frame body 31 having a rectangular frame shape (refer to Fig. 6), a pair of left and right columnar bodies 32 extending in the vertical direction, and a cross pipe 33 (frame) extending in the width direction V3.

In a top view of Fig. 6, the frame body 31 has a rectangular frame shape larger than the external shape of the control device 4. The control device 4 is accommodated on the inward side of the frame body 31. In the diagrams, the reference sign 34 indicates a pair of left and right front flange portions which protrude forward from an upper front edge of the frame body 31, the reference sign 35 indicates a pair of left and right rear flange portions which protrude rearward from an upper rear edge of the frame body 31, and the reference sign 18 indicates boss portions of the bottom portion of the charger 1 which are disposed at positions respectively overlapping the flanges 34 and 35 in a top view. For example, each of the flange portions 34 and 35 is coupled to each of boss portions 18 using a fastening member such as a bolt.

The columnar bodies 32 are disposed on the outward sides of the frame body 31 in the width direction V3. Lower portions of the columnar bodies 32 are coupled to side portions of the frame body 31 in the width direction V3.

As illustrated in Fig. 7, the cross pipe 33 is disposed on the upper side of the control device 4. The cross pipe 33 extends throughout the entirety of the battery 100 in a placed state in the width direction V3 (refer to Fig. 12). In the width direction V3, the length of the cross pipe 33 is longer than that of the control device 4 (refer to Fig. 6). Left and right end portions of the cross pipe 33 are coupled to upper and lower central portions of the columnar bodies 32 (refer to Fig. 11).

As illustrated in Fig. 12, the cross pipe 33 is disposed between the control device 4 and the first inclined surface 10a in the vertical direction. The cross pipe 33 is disposed on a side closer to the grip portion 110 of the battery 100 in a placed state than the central portion on the first inclined surface 10a in the length direction V1. The cross pipe 33 is disposed behind and in the vicinity of the rising portion 14c of the placement surface recess portion 14.

In a top view of Fig. 6, the cross pipe 33 is disposed at a position overlapping a central portion of the control device 4 in the forward-rearward direction. In the diagrams, the reference sign 37 indicates a pair of left and right brackets which protrude forward from a front portion of the cross pipe 33, and the reference sign 19 (refer to Fig. 5) indicates boss portions of lower portion on the first inclined surface 10a which are disposed at positions respectively overlapping the brackets 37 in a top view. For example, each of the brackets 37 is coupled to each of the boss portions 19 using a fastening member 38 such as a bolt.

As illustrated in Fig. 11, the rear frame 40 is disposed behind the front frame 30. The rear frame 40 is disposed below the upper cover 3. The rear frame 40 includes a pair of left and right side wall portions 41 which extend in the vertical direction, and a width-direction-extending portion 42 which extends in the width direction V3 (refer to Fig. 6). The pair of left and right side wall portions 41 and the width-direction-extending portion 42 are integrally formed using the same members. The pair of left and right side wall portions 41 and the width-direction-extending portion 42 may be integrally formed using different members.

The side wall portions 41 are disposed on the outward sides of the rear portion of the tray 2 (rear portion of the battery 100 in a placed state) in the width direction V3 (refer to Fig. 12). In a side view of Fig. 11, the side wall portions 41 have external shapes of which lengths in the forward-rearward direction become longer toward the lower side. The side wall portions 41 have a pair of upper and lower circular opening portions 41h. Lower end portions of the side wall portions 41 are coupled to the bottom portion of the charger 1 using a fastening member such as a bolt.

The width-direction-extending portion 42 is disposed on the upper side of the rear portion of the tray 2 (rear portion of the battery 100 in a placed state) (refer to Fig. 12). The width-direction-extending portion 42 is disposed between the charger terminal 6 and the upper cover 3 in the vertical direction (refer to Fig. 12). Left and right end portions of the width-direction-extending portion 42 are coupled to upper ends of the side wall portions 41. In a front view of Fig. 4, the width-direction-extending portion 42 has a curved shape along the opening edge portion 3a of the upper cover 3. In a cross-sectional view of Fig. 12, the width-direction-extending portion 42 is inclined downward to the rear along the upper cover 3.

### <Holding member>

As illustrated in Fig. 12, the holding member 7 holds the charger terminal 6 in a connection direction with respect to the battery 100 (arrow J1 direction in the diagram). In a top view of Fig. 6, the holding member 7 has a U-shape opening forward. The holding member 7 includes a pair of left and right side arm portions 50 which extend in the forward-rearward direction, and a support arm portion 51 which supports the charger terminal 6. The pair of left and right side arm portions 50 and support arm portion 51 are integrally formed using the same members. The pair of left and right side arm portions 50 and support arm portion 51 may be integrally formed using different members.

The side arm portions 50 are disposed on the inward sides of the side wall portions 41 of the rear frame 40 in the width direction V3. In a side view of Fig. 11, the side arm portions 50 extend such that they are positioned downward toward the rear side along the inclination of the battery 100 in a placed state. The side arm portions 50 have long holes 50h (guide holes). The long holes 50h extend in a direction in which the side arm portions 50 extend. The side arm portions 50 are supported by a shaft (not illustrated) in the width direction V3 of the charger 1 via the long holes 50h.

As illustrated in Fig. 6, the support arm portion 51 is disposed on the rear side of the charger terminal 6. The support arm portion 51 extends in the width direction V3. Left and right end portions of the support arm portion 51 are coupled to rear ends of the side arm portions 50. In the diagrams, the reference sign 52 indicates a pair of left and right support pins which protrude forward from the support arm portion 51, and the reference sign 53 indicates biasing members (elastic members) such as springs which are respectively provided in the support pins.

At a connection position (refer to the solid line in Fig. 12) where the charger terminal 6 is connected to the battery 100, the charger terminal 6 is biased by the biasing member 53 in the arrow J1 direction in the diagram toward the battery terminal 106. That is, the biasing member 53 biases the charger terminal 6 in the connection direction with respect to the battery 100 at the connection position.

### <Operation mechanism>

As illustrated in Fig. 12, the operation mechanism 8 includes the lever 60 (operation portion) which allows movement between the connection position where the charger terminal 6 is connected to the battery terminal 106 (which will hereinafter be simply referred to as "a connection position", refer to the solid line in Fig. 12) and a retreat position for retreat from the battery terminal 106 (which will hereinafter be referred to as "a retreat position", refer to the two-dot dashed line in Fig. 12).

Here, the connection position means a position where the charger terminal 6 is fitted into the terminal 106 of the battery 100 in a placed state. The retreat position means a position where the charger terminal 6 has separated from the terminal 106 of the battery 100 in a placed state. The operation mechanism 8 moves the charger terminal 6 between the connection position and the retreat position using a link mechanism. As illustrated in Fig. 11, the operation mechanism 8 includes the lever 60 (operation portion); and the first link 61, a second link 62, and a third link 63 constituting the link mechanism.

As illustrated in Fig. 5, the lever 60 is disposed on the outward side of the charger 1 from the placement surface recess portion 14. The lever 60 has a U-shape opening upward at the center of the tray 2 in the width direction V3 (refer to Fig. 4). In a front view of Fig. 4, the lever 60 includes a first extending portion 60a which extends in the width direction V3, and a second extending portion 60b which is inclined and extends such that it is positioned upward toward the outward side in the width direction V3 from left and right end portions of the first extending portion 60a.

As illustrated in Fig. 11, the lever 60 can turn around a shaft in the width direction V3 of the charger 1 (around the first pivot shaft 65). The lever 60 is constituted such that it turns downward around the shaft due to a load from above. The lever 60 is constituted such that it turns upward around the shaft due to a load from below. The lever 60 at the connection position (refer to the two-dot dashed line in Fig. 11) is in a state in which the lever 60 has turned further upward around the shaft than the lever 60 at the retreat position (refer to the dotted line in Fig. 11). A portion of the lever 60 (a portion of the first extending portion 60a) is positioned below the lowest end 14b of the placement surface recess portion 14 at the retreat position (refer to Fig. 10).

As illustrated in Fig. 11, the first link 61 extends in a manner of straddling between the end portion of the lever 60 (second extending portion 60b) in the width direction V3 and the first pivot shaft 65 (a shaft serving as a fulcrum). One end portion of the first link 61 is coupled (fixed) to the end portion of the lever 60 in the width direction V3. The other end portion of the first link 61 (an end portion on a side opposite to the lever 60) can turn around the first pivot shaft 65. The other end portion of the first link 61 has a long hole 61h which restricts turning around the first pivot shaft 65 and has an arc shape in a side view.

The second link 62 extends in a manner of straddling between the first pivot shaft 65 and a second pivot shaft 66 (a shaft serving as an action point). One end portion of the second link 62 is coupled (fixed) to the other end portion of the first link 61. One end portion of the second link 62 can turn around the first pivot shaft 65.

The third link 63 extends in a crank shape in the forward-rearward direction in a manner of straddling between the second pivot shaft 66 and the holding member 7. One end portion of the third link 63 is connected to the other end portion of the second link 62 via the second pivot shaft 66. The other end portion of the third link 63 is coupled (fixed) to the front end portions of the side arm portions 50 of the holding member 7 using a fastening member such as a bolt.

The third link 63 moves in a direction along the inclination of the placement surface of the tray 2 (inclination of the battery 100 in a placed state) (arrow V1 direction in the diagram, a direction in which the long holes of the side arm portions 50 extend) when the lever 60 is moved between the connection position and the retreat position. Although it is not illustrated, at least one of the other end portion of the second link 62 and one end portion of the third link 63 has a part for converting turning around the second pivot shaft 66 into movement in the arrow V1 direction in the diagram (for example, an escape portion such as a long hole).

### <Position of end portion of upper cover>

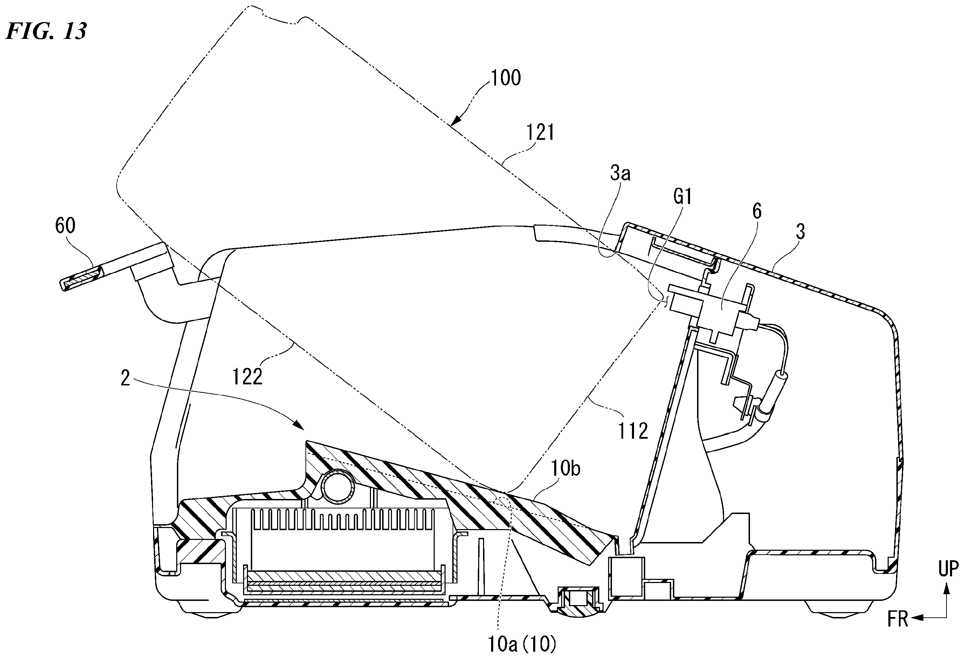

Fig. 13 illustrates an example of a case in which the battery 100 is inserted between the lever 60 at the connection position and the upper cover 3. In the example of Fig. 13, a portion on the second side surface 122 of the battery 100 comes into contact with the upper end of the lever 60 at the connection position. In addition, a lower corner portion of the battery 100 (a corner portion formed by the second side surface 122 and the second surface 112 of the battery 100) comes into contact with the ribs 10b on the first inclined surface 10a of the tray 2. In addition, a portion on the first side surface 121 of the battery 100 comes into contact with the opening edge portion 3a of the upper cover 3. The position of the end portion of the upper cover 3 is set such that the charger terminal 6 does not interfere with the second surface 112 of the battery 100 when the battery 100 is inserted between the lever 60 at the connection position and the upper cover 3. In the diagrams, the reference sign G1 indicates a gap between the second surface 112 of the battery 100 and the charger terminal 6.

### <Operational effects>

As described above, the charger 1 for the portable battery 100 of the foregoing embodiment is used in an electric vehicle. The charger 1 for the portable battery 100 includes the tray 2 in which the battery 100 is placed, the control device 4 which performs charging control of the battery 100, and the cross pipe 33 which is positioned above the control device 4. The tray 2 has the first inclined surface 10a which is inclined with respect to a horizontal surface and is formed in the length direction V1 of the battery 100 in a placed state, and the second inclined surface 11a which rises from the end portion on the first inclined surface 10a in the height direction V2 of the battery 100 in a placed state and receives the second surface 112 of the battery 100. The control device 4 is disposed below the first inclined surface 10a. The cross pipe 33 is disposed between the control device 4 and the first inclined surface 10a in the vertical direction.

According to this constitution, the first inclined surface 10a of the tray 2 and the second inclined surface 11a are obliquely disposed with respect to the vertical direction. For this reason, compared to when the battery 100 is disposed in a manner of standing upright such that it is elongated in the vertical direction in a state in which the battery 100 is mounted in the charger 1, the height in the vertical direction in a battery-placed state can be reduced.

Furthermore, the control device 4 is disposed below the first inclined surface 10a. Therefore, the following effect is exhibited. Compared to when the control device 4 is disposed above the first inclined surface 10a, the height of the charger 1 in the vertical direction can be reduced. Furthermore, compared to when the control device 4 is disposed on a lateral side of the first inclined surface 10a, an installation area of the charger 1 can be reduced.

Furthermore, since the cross pipe 33 is disposed between the control device 4 and the first inclined surface 10a in the vertical direction, transfer of an impact to the control device 4 occurring when the battery 100 (heavy article) is placed in the tray 2 can be curbed.

In the foregoing embodiment, the battery 100 has the grip portion 110 at the end portion in the length direction V1, and the grip portion 110 is disposed on the upper end side on the first inclined surface 10a. The cross pipe 33 is disposed on a side closer to the grip portion 110 than the central portion on the first inclined surface 10a in the length direction V1. Therefore, the following effect is exhibited.

Since the grip portion 110 is disposed on the upper end side on the first inclined surface 10a, compared to when the grip portion 110 is disposed on a lower end side of the first inclined surface 10a, the battery 100 is easily placed in the tray 2. Furthermore, since the cross pipe 33 is disposed on a side closer to the grip portion 110 than the central portion on the first inclined surface 10a in the length direction V1, a load on the control device 4 occurring when the battery 100 is placed in the tray 2 can be suitably curbed on a side where the battery 100 is easily placed in the tray 2.

In the foregoing embodiment, the bottom portion of the charger 1 has the bottom surface recess portion 16 which is recessed downward at a part positioned below the control device 4. Therefore, the following effect is exhibited.

Heat of the control device 4 can escape via a gap between the control device 4 and the bottom surface recess portion 16.

In the foregoing embodiment, the heat conduction member 20 having a higher heat conductivity than the bottom portion of the charger 1 is disposed in the bottom surface recess portion 16. Therefore, the following effect is exhibited.

Heat of the control device 4 can more effectively escape via the heat conduction member 20.

In the foregoing embodiment, the ribs 10b projecting upward are formed on the first inclined surface 10a. Therefore, the following effect is exhibited.

An impact occurring when the battery 100 is placed on the first inclined surface 10a can be relaxed by the ribs 10b.

In the foregoing embodiment, the central portion on the first inclined surface 10a in the width direction V3 has a curved surface shape projecting downward. Therefore, the following effect is exhibited.

Accumulation of heat on a lower surface of the battery 100 (a surface on a side of the first inclined surface 10a) can be curbed.

In the foregoing embodiment, the drain hole 10h is formed at the lowest end 14b on the first inclined surface 10a. The bottom portion of the charger 1 has the enclosure portion 13 having an opening larger than the drain hole 10h at a part positioned below the drain hole 10h. The discharge holes 13h are formed in the enclosure portion 13. Therefore, the following effect is exhibited.

Water which has infiltrated into the tray 2 can be suitably discharged via the drain hole 10h and the discharge holes 13h.

In the foregoing embodiment, the charger 1 further includes the holding member 7 which holds the charger terminal 6 in the connection direction J1 with respect to the battery 100. Therefore, the following effect is exhibited.

The charger terminal 6 can be smoothly connected to the battery 100 by the holding member 7.

In the foregoing embodiment, the cross pipe 33 extends throughout the entirety of the battery 100 in the width direction V3. Therefore, the following effect is exhibited.

Transfer of an impact to the control device 4 occurring when the battery 100 (heavy article) is placed in the tray 2 can be more effectively curbed.

### <Modification example>

In the foregoing embodiment, an example in which the first inclined surface 10a is inclined with respect to the bottom surface of the charger 1 has been described, but it is not limited thereto. For example, the first inclined surface 10a may be parallel to the bottom surface of the charger 1. For example, the bottom surface of the charger 1 (for example, the bottom surface of a locker or the like for placement of a charger) may be inclined with respect to a horizontal surface, and the bottom surface of the charger 1 and the first inclined surface 10a may be parallel to each other. The first inclined surface 10a need only be inclined with respect to a horizontal surface. That is, the battery 100 need only be disposed such that it is inclined upward.

In the foregoing embodiment, an example in which the grip portion 110 of the battery 100 is disposed on the upper end side on the first inclined surface 10a has been described, but it is not limited thereto. For example, the grip portion 110 may be disposed on the lower end side of the first inclined surface 10a.

In the foregoing embodiment, an example in which the cross pipe 33 is disposed on a side closer to the grip portion 110 than the central portion on the first inclined surface 10a in the length direction V1 has been described, but it is not limited thereto. For example, the cross pipe 33 may be disposed on a side closer to the second surface 112 (on a side opposite to the grip portion 110) than the central portion on the first inclined surface 10a in the length direction V1.

In the foregoing embodiment, an example in which the bottom portion of the charger 1 has the bottom surface recess portion 16 which is recessed downward at a part positioned below the control device 4 has been described, but it is not limited thereto. For example, the bottom portion of the charger 1 may have a flat support portion which supports the control device 4 from below. That is, the bottom portion of the charger 1 may not have the bottom surface recess portion 16 at a part positioned below the control device 4.

In the foregoing embodiment, an example in which the heat conduction member 20 having a higher heat conductivity than the bottom portion of the charger 1 is disposed in the bottom surface recess portion 16 has been described, but it is not limited thereto. For example, the heat conduction member 20 may not be disposed in the bottom surface recess portion 16.

In the foregoing embodiment, an example in which the ribs 10b projecting upward are formed on the first inclined surface 10a has been described, but it is not limited thereto. For example, the first inclined surface 10a may have a flat upper surface which comes into contact with the second side surface 122 of the battery 100 from below. That is, the ribs 10b projecting upward may not be formed on the first inclined surface 10a.

In the foregoing embodiment, an example in which the central portion on the first inclined surface 10a in the width direction V3 has a curved surface shape projecting downward has been described, but it is not limited thereto. For example, the central portion on the first inclined surface 10a in the width direction V3 may not have a curved surface shape projecting downward.

In the foregoing embodiment, an example in which the drain hole 10h is formed at the lowest end 14b on the first inclined surface 10a, the bottom portion of the charger 1 has the enclosure portion 13 having an opening larger than the drain hole 10h at a part positioned below the drain hole 10h, and the discharge holes 13h are formed in the enclosure portion 13 has been described, but it is not limited thereto. For example, the drain hole 10h may not be formed at the lowest end 14b on the first inclined surface 10a. In addition, the bottom portion of the charger 1 may not have the enclosure portion 13 having an opening larger than the drain hole 10h at a part positioned below the drain hole 10h. In addition, the discharge holes 13h may not be formed in the enclosure portion 13.

In the foregoing embodiment, an example in which the cross pipe 33 extends throughout the entirety of the battery 100 in the width direction V3 has been described, but it is not limited thereto. For example, the cross pipe 33 may extend along a portion of the battery 100 in the width direction V3. For example, the cross pipe 33 may extend in a direction intersecting the width direction V3 of the battery 100. For example, a frame positioned between the control device 4 and the first inclined surface 10a in the vertical direction may be a constitution such as a plate member other than the cross pipe 33.

In the foregoing embodiment, an example in which the biasing member 53 biasing the charger terminal 6 in the connection direction with respect to the battery 100 at the connection position is provided has been described, but it is not limited thereto. For example, the charger terminal 6 may not be biased by the biasing member 53 toward the battery terminal 106. That is, the charger 1 may not have the biasing member 53.

In the foregoing embodiment, an example in which the operation mechanism 8 moves the charger terminal 6 between the connection position and the retreat position using the link mechanism has been described, but it is not limited thereto. For example, the operation mechanism 8 may move the charger terminal 6 between the connection position and the retreat position using a constitution such as a cam mechanism other than the link mechanism.

The present invention is not limited to the foregoing embodiment. For example, the foregoing saddle-type vehicle includes all types of vehicles in which a rider rides the vehicle in a manner of straddling a vehicle body and includes not only motorcycles (including motorized bicycles and scooter-type vehicles) but also vehicles having three wheels (including vehicles having two front wheels and one rear wheel in addition to vehicles having one front wheel and two rear wheels). In addition, the present invention can be applied to not only motorcycles but also vehicles having four wheels such as automobiles.

For example, the charger is not limited to a charger for a mobile battery of a motorcycle and may be applied to a charger for an electrical instrument other than an electric vehicle.

Further, the constitutions in the foregoing embodiment are examples of the present invention, and various changes can be made within a range not departing from the gist of the present invention, such as replacing the constituent elements of the embodiment with known constituent elements.

### BRIEF DESCRIPTION OF THE REFERENCE SYMBOLS

1 Charger
2 Tray
4 Control device
6 Charger terminal
7 Holding member
10a First inclined surface
10b Rib
10h Drain hole
11a Second inclined surface
13 Enclosure portion
13h Discharge holes
16 Bottom surface recess portion (recess portion)
20 Heat conduction member
33 Cross pipe (frame)
100 Battery
110 Grip portion
J1 Connection direction of charger terminal with respect to battery
V1 Length direction of battery
V2 Height direction of battery
V3 Width direction of battery

## Claims

1. A charger (1), for a portable battery (100) used in an electric vehicle, the charger (1) comprising:
a tray (2) in which the battery (100) can be placed; and
a control device (4) which performs charging control of the battery (100);
wherein the tray (2) has
a first inclined surface (10a) which is inclined with respect to a horizontal surface and is formed in a length direction (V1) of the battery (100) in a state of being placed in the charger (1), and
a second inclined surface (11a) which rises from a rear lower end portion on the first inclined surface (10a) in a height direction (V2) of the battery (100) in a state of being placed in the charger (1) and receives a bottom surface of the battery (100),
wherein the control device (4) is disposed below the first inclined surface (10a),
wherein an upper cover (3) covering a charger terminal (6) from above is provided in an upper rear portion of the charger (1),
**characterized in that** the charger (1) further comprises
a frame (33) which is positioned above the control device (4),
wherein the frame (33) is disposed between the control device (4) and the first inclined surface (10a) in a vertical direction,
wherein the frame (33) is disposed on a side in front of a central portion on the first inclined surface (10a) in the length direction (V1),
wherein the upper cover (3) has an opening edge portion (3a) along one surface (121) of the battery (100) in a state of being placed in the charger (1),
wherein the frame (33) is disposed on a side in front of the opening edge portion (3a),
wherein the tray (2) has a placement surface recess portion (14) which is recessed downward beyond the first inclined surface (10a) at an end portion on a side of a grip portion (110) of the battery (100) in a state of being placed in the charger (1),
wherein the placement surface recess portion (14) has a size to an extent that a portion of a hand of a user enters,
wherein the frame (33) is disposed behind and in the vicinity of a rising portion (14c) of the placement surface recess portion (14), and
wherein the rising portion (14c) rises upward toward the first inclined surface (10a) from a rear end on a bottom surface (14a) of the placement surface recess portion (14).

2. The charger (1) for a portable battery (100) according to claim 1,
wherein the battery (100) has the grip portion (110) at an end portion in the length direction (V1),
wherein the grip portion (110) is disposed on an upper end side on the first inclined surface (10a), and
wherein the frame (33) is disposed on a side closer to the grip portion (110) than the central portion on the first inclined surface (10a) in the length direction (V1).

3. The charger (1) for a portable battery (100) according to claim 1 or 2,
wherein a bottom portion of the charger (1) has a recess portion (16) which is recessed downward at a part positioned below the control device (4).

4. The charger (1) for a portable battery (100) according to claim 3,
wherein a heat conduction member (20) having a higher heat conductivity than the bottom portion of the charger (1) is disposed in the recess portion (16).

5. The charger (1) for a portable battery (100) according to any one of claims 1 to 4,
wherein a rib (10b) projecting upward is formed on the first inclined surface (10a).

6. The charger (1) for a portable battery (100) according to any one of claims 1 to 5,
wherein a central portion on the first inclined surface (10a) in a width direction has a curved surface shape projecting downward.

7. The charger (1) for a portable battery (100) according to any one of claims 1 to 6,
wherein a drain hole (10h) is formed at a lowest end on the first inclined surface (10a),
wherein the bottom portion of the charger (1) has an enclosure portion (13) having an opening larger than the drain hole (10h) at a part positioned below the drain hole (10h), and
wherein a discharge hole (13h) is formed in the enclosure portion (13).

8. The charger (1) for a portable battery (100) according to any one of claims 1 to 7 further comprising:
a holding member (7) which holds the charger terminal (6) in a connection direction with respect to the battery (100).

9. The charger (1) for a portable battery (100) according to any one of claims 1 to 8,
wherein the frame (33) extends throughout the entirety of the battery (100) in a width direction (V3).

## Patentansprüche

1. Ein Ladegerät (1) für eine in einem Elektrofahrzeug verwendete tragbare Batterie (100), wobei das Ladegerät (1) aufweist:
eine Schale (2), in welche die Batterie (100) eingesetzt werden kann, und
eine die Ladesteuerung der Batterie (100) durchführende Steuervorrichtung (4),
wobei die Schale (2) aufweist:
eine erste geneigte Fläche (10a), welche in Bezug auf eine horizontale Fläche geneigt ist und welche in Längsrichtung (V1) der Batterie (100), in einem in dem Ladegerät (1) eingesetzten Zustand, ausgebildet ist, und
eine zweite geneigte Fläche (11a), welche von einem hinteren unteren Endabschnitt der ersten geneigten Fläche (10a) in einer Höhenrichtung (V2) der Batterie (100), in einem in dem Ladegerät (1) eingesetzten Zustand, ansteigt und eine Bodenfläche der eingesetzten Batterie (100) aufnimmt,
wobei die Steuervorrichtung (4) unterhalb der ersten geneigten Fläche (10a) angeordnet ist,
wobei eine einen Lade-Anschluss (6) von oben abdeckende, sich in einem oberen rückwärtigen Abschnitt des Ladegerätes (1) befindliche obere Abdeckung (3) vorgesehen ist,
**dadurch gekennzeichnet, dass** das Ladegerät (1) ferner aufweist:
einen oberhalb der Steuervorrichtung (4) angeordneten Rahmen (33),
wobei der Rahmen (33), in vertikaler Richtung gesehen, zwischen der Steuervorrichtung (4) und der ersten geneigten Fläche (10a) angeordnet ist,
wobei der Rahmen (33), in Längsrichtung (V1) gesehen, vor einem mittleren Abschnitt der ersten geneigten Fläche (10a) angeordnet ist,
wobei die obere Abdeckung (3) einen längs der Oberfläche (121) der in das Ladegerät (1) eingesetzten Batterie (100) verlaufenden Öffnungsrand-Abschnitt (3a) aufweist,
wobei der Rahmen (33) auf einer Seite vor dem Öffnungsrand-Abschnitt (3a) angeordnet ist,
wobei die Schale (2) einen Auflagefläche-Ausnehmungsabschnitt (14) aufweist, der an einem Endabschnitt auf der Seite eines Griffabschnitts (110) der eingesetzten Batterie (100) nach unten, über die erste geneigte Fläche (10a) hinaus, vertieft ist,
wobei der Auflagefläche-Ausnehmungsabschnitt (14) so bemessen ist, dass er einen Teil der Hand eines Benutzers aufnehmen kann,
wobei der Rahmen (33) hinter und im Bereich eines ansteigenden Abschnitts (14c) des Auflagefläche-Aussparungsabschnitts (14) angeordnet ist, und
wobei der ansteigende Abschnitt (14c) von dem rückwärtigen Ende der Bodenfläche (14a) des Auflagefläche-Aussparungsabschnitts (14) in Richtung der ersten geneigten Fläche (10a) nach oben ansteigt.

2. Das Ladegerät (1) für eine tragbare Batterie (100) nach Anspruch 1,
wobei der Griffabschnitt (110), in Längsrichtung (V1) gesehen, an einem Endabschnitt der Batterie (100) angeordnet ist,
wobei der Griffabschnitt (110) an der oberen Stirnseite der ersten geneigten Fläche (10a) angeordnet ist, und
wobei der Rahmen (33) auf einer Seite angeordnet ist, die, in Längsrichtung (V1) gesehen, dem Griffabschnitt (110) näherliegt als der mittlere Abschnitt der ersten geneigten Fläche (10a).

3. Das Ladegerät (1) für eine tragbare Batterie (100) nach Anspruch 1 oder 2, wobei ein Bodenabschnitt des Ladegerätes (1) einen Aussparungs-Abschnitt (16) aufweist, der an einem unterhalb der Steuervorrichtung (4) positionierten Teil nach unten ausgespart ist.

4. Das Ladegerät (1) für eine tragbare Batterie (100) nach Anspruch 3, wobei in dem Aussparungs-Abschnitt (16) ein Wärmeleitelement (20) angeordnet ist, welches eine höhere Wärmeleitfähigkeit aufweist als der Bodenabschnitt des Ladegerätes (1).

5. Das Ladegerät (1) für eine tragbare Batterie (100) nach einem der Ansprüche 1 bis 4, wobei an der ersten geneigten Fläche (10a) eine nach oben vorstehende Rippe (10b) ausgebildet ist.

6. Das Ladegerät (1) für eine tragbare Batterie (100) nach einem der Ansprüche 1 bis 5, wobei ein zentraler Abschnitt der ersten geneigten Fläche (10a), in Breitenrichtung gesehen, eine gekrümmte nach unten vorstehende Oberflächenform aufweist.

7. Das Ladegerät (1) für eine tragbare Batterie (100) nach einem der Ansprüche 1 bis 6,
wobei an dem untersten Ende der ersten geneigten Fläche (10a) ein Abflussloch (10h) ausgebildet ist, wobei der untere Abschnitt des Ladegeräts (1) in einem Bereich unterhalb des Abflusslochs (10h) einen Einfassungs-Abschnitt (13) aufweist, mit einer Öffnung, welche größer ist, als das Abflussloch (10h), und wobei in dem Einfassungs-Abschnitt (13) eine Auslassöffnung (13h) ausgebildet ist.

8. Das Ladegerät (1) für eine tragbare Batterie (100) nach einem der Ansprüche 1 bis 7, ferner aufweisend:
ein Halteelement (7), welches, in Anschlussrichtung gesehen, den Lade-Anschluss (6) in Bezug auf die Batterie (100) fixiert.

9. Das Ladegerät (1) für eine tragbare Batterie (100) nach einem der Ansprüche 1 bis 8, wobei sich der Rahmen (33), in Breitenrichtung (V3) gesehen, über die gesamte Batterie (100) erstreckt.

## Revendications

1. Chargeur (1), pour une batterie portable (100) utilisée dans un véhicule électrique, le chargeur (1), comprenant :
un plateau (2) dans lequel la batterie (100) peut être placée ; et
un dispositif de contrôle (4) qui réalise un contrôle de charge de la batterie (100) ;
dans lequel le plateau (2) a
une première surface inclinée (10a) qui est inclinée par rapport à une surface horizontale et est formée dans une direction de la longueur (V1) de la batterie (100) dans un état dans lequel elle est placée dans le chargeur (1), et
une deuxième surface inclinée (11a) qui monte à partir d'une partie d'extrémité inférieure arrière sur la première surface inclinée (10a) dans une direction de la hauteur (V2) de la batterie (100) dans un état dans lequel elle est placée dans le chargeur (1), et reçoit une surface inférieure de la batterie (100),
dans lequel le dispositif de contrôle (4) est disposé en dessous de la première surface inclinée (10a),
dans lequel un couvercle supérieur (3) recouvrant une borne de chargeur (6) par le haut est fourni dans une partie arrière supérieure du chargeur (1),
**caractérisé en ce que** le chargeur (1) comprend en outre
un cadre (33) qui est positionné au-dessus du dispositif de contrôle (4),
dans lequel le cadre (33) est disposé entre le dispositif de contrôle (4) et la première surface inclinée (10a) dans une direction verticale,
dans lequel le cadre (33) est disposé sur un côté devant une partie centrale sur la première surface inclinée (10a) dans la direction de la longueur (V1),
dans lequel le couvercle supérieur (3) a une partie de bord d'ouverture (3a) le long d'une surface (121) de la batterie (100) dans un état dans lequel elle est placée dans le chargeur (1),
dans lequel le cadre (33) est disposé sur un côté devant la partie de bord d'ouverture (3a),
dans lequel le plateau (2) a une partie d'évidement de surface de placement (14) qui est évidée vers le bas au-delà de la première surface inclinée (10a) au niveau d'une partie d'extrémité sur un côté d'une partie de préhension (110) de la batterie (100) dans un état dans lequel elle est placée dans le chargeur (1),
dans lequel la partie d'évidement de surface de placement (14) a une taille telle qu'une partie de la main d'un utilisateur y pénètre,
dans lequel le cadre (33) est disposé derrière et dans le voisinage d'une partie montante (14c) de la partie d'évidement de surface de placement (14), et
dans lequel la partie montante (14c) monte vers le haut vers la première surface inclinée (10a) à partir d'une extrémité arrière sur une surface inférieure (14a) de la partie d'évidement de surface de placement (14).

2. Chargeur (1) pour une batterie portable (100) selon la revendication 1,
dans lequel la batterie (100) a la partie de préhension (110) au niveau d'une partie d'extrémité dans la direction de la longueur (V1),
dans lequel la partie de préhension (110) est disposée sur un côté d'extrémité supérieure sur la première surface inclinée (10a), et
dans lequel le cadre (33) est disposé sur un côté plus proche de la partie de préhension (110) que la partie centrale sur la première surface inclinée (10a) dans la direction de la longueur (V1).

3. Chargeur (1) pour une batterie portable (100) selon la revendication 1 ou 2,
dans lequel une partie inférieure du chargeur (1) a une partie d'évidement (16) qui est évidée vers le bas au niveau d'une partie positionnée en dessous du dispositif de contrôle (4).

4. Chargeur (1) pour une batterie portable (100) selon la revendication 3,
dans lequel un élément de conduction thermique (20) ayant une conductivité thermique plus élevée que la partie inférieure du chargeur (1) est disposé dans la partie d'évidement (16).

5. Chargeur (1) pour une batterie portable (100) selon l'une quelconque des revendications 1 à 4,
dans lequel une nervure (10b) faisant saillie vers le haut est formée sur la première surface inclinée (10a).

6. Chargeur (1) pour une batterie portable (100) selon l'une quelconque des revendications 1 à 5,
dans lequel une partie centrale sur la première surface inclinée (10a) dans une direction de la largeur a une forme de surface incurvée faisant saillie vers le bas.

7. Chargeur (1) pour une batterie portable (100) selon l'une quelconque des revendications 1 à 6,
dans lequel un orifice de vidange (10h) est formé au niveau d'une extrémité la plus inférieure sur la première surface inclinée (10a),
dans lequel la partie inférieure du chargeur (1) a une partie d'enceinte (13) ayant une ouverture plus large que l'orifice de vidange (10h) au niveau d'une partie positionnée en dessous de l'orifice de vidange (10h), et
dans lequel un orifice d'évacuation (13h) est formé dans la partie d'enceinte (13).

8. Chargeur (1) pour une batterie portable (100) selon l'une quelconque des revendications 1 à 7, comprenant en outre :
un élément de maintien (7) qui maintient la borne de chargeur (6) dans une direction de connexion par rapport à la batterie (100).

9. Chargeur (1) pour une batterie portable (100) selon l'une quelconque des revendications 1 à 8,
dans lequel le cadre (33) s'étend sur l'ensemble la batterie (100) dans une direction de la largeur (V3).
